# EUROPEAN PATENT APPLICATION

(11) **EP 4 729 812 A1**
(43) Date of publication of application: **22.04.2026**
(21) Application number: 24822626.8
(22) Date of filing: 06.06.2024
(51) Int. Cl.: F16K 11/074

(54) **FLUID CONTROL VALVE**

(30) Priority: 16.06.2023 CN 202310723833
(71) Applicant: Valeo Automotive Air Conditioning Hubei Co. Ltd., Jingzhou, Hubei 434000 (CN)
(72) Inventor: WAN, Xuanchen, Jingzhou, Hubei 434000 (CN); YAO, Ze, Jingzhou, Hubei 434000 (CN); LI, Qing, Jingzhou, Hubei 434000 (CN)
(74) Representative: Valeo Powertrain Systems
(86) International application number: PCT/CN2024/097711
(87) International publication number: WO 2024/255675

(57) **Abstract**

The present disclosure relates to a fluid control valve (1), comprising: a valve body (10), wherein the valve body (10) is provided with a valve core mounting cavity (13); and a valve core (20), wherein the valve core (20) is mounted in the valve core mounting cavity (13) and can rotate around a rotation axis (X) relative to the valve body (10). The fluid control valve (1) is provided with a balancing channel (2), the balancing channel (2) being located in the valve core mounting cavity (13).

## Description

### Technical Field

The present disclosure relates to a fluid control valve. In particular, the fluid control valve has a balancing channel located within the valve core mounting cavity.

### Background Art

A fluid circuit is usually provided with a fluid control valve and a fitting to switch and control the flow direction of fluid. In a fluid circuit of an automotive thermal management system, multiple fluid control valves are usually paired with multiple fittings to control the flow of the refrigerant and heat exchange fluid, thereby switching between different operating modes of the automotive thermal management system.

In the fluid control valve disclosed in the prior art, the fluid flows only on one side of the valve core. In this case, the pressure of the fluid acts on one side of the valve core, causing an imbalance of pressure on both sides of the valve core.

### Summary of the Invention

Therefore, the present disclosure is intended to solve the above problem, and an objective thereof is to provide a fluid control valve that has the advantages of being able to keep pressure balance on two sides of the valve core and having a compact structure.

The objective is achieved by a fluid control valve according to an embodiment of the present disclosure. The fluid control valve comprises: a valve body, the valve body having a valve core mounting cavity; and a valve core, wherein the valve core is mounted in the valve core mounting cavity, and is able to rotate about a rotation axis relative to the valve body. The fluid control valve has a balancing channel, and the balancing channel is located in the valve core mounting cavity, and the balancing channel is in communication with two sides of the valve core.

One of the objectives of the present disclosure is to provide a fluid control valve that comprises a balancing channel without increasing its volume. The fluid control valve according to the present disclosure arranges the balancing channel within the valve core mounting cavity for mounting the valve core, thus not additionally increasing the diameter of the valve body or the overall size of the fluid control valve. Since the balancing channel is in communication with two sides of the valve core, the fluid control valve according to the present disclosure can balance the fluid pressure on two sides of the valve core through the balancing channel and has a relatively small volume, facilitating use in compact fluid circuits.

The fluid control valve according to the present disclosure may further have one or more of the following features individually or in combination.

According to one embodiment of the present disclosure, the balancing channel comprises a first path within the valve core mounting cavity that bypasses an edge of the valve core from one side of the valve core to reach the other side of the valve core. Fluid can pass through the first path, that is, bypassing the edge of the valve core from one side of the valve core to reach the other side of the valve core, so that the two sides of the valve core are filled with fluid and are in a state of fluid equilibrium.

According to one embodiment of the present disclosure, the balancing channel comprises a second path that runs through the valve core. Fluid can flow through the second path from one side of the valve core, via the valve core, to the other side of the valve core, so that the two sides of the valve core are filled with fluid and are in a state of fluid equilibrium.

According to one embodiment of the present disclosure, the valve body has a first valve port, a second valve port, a third valve port, a fourth valve port and a fifth valve port, wherein the first valve port is in communication with the balancing channel. Fluid enters and exits the fluid control valve through these valve ports. In particular, the first valve port may be a valve port for fluid with higher pressure to enter and exit the fluid control valve. The communication between the first valve port and the balancing channel allows fluid with higher pressure to fill two sides of the valve core.

According to one embodiment of the present disclosure, the valve core comprises a core body, a first sealing cap and a second sealing cap, and the core body has a first valve core port, a second valve core port, a third valve core port and a fourth valve core port. The first sealing cap is connected to the core body and covers the first valve core port and the second valve core port, so that the first valve core port and the second valve core port are in sealed communication to form a first valve core channel. The second sealing cap is connected to the core body and covers the third valve core port and the fourth valve core port, so that the third valve core port and the fourth valve core port are in sealed communication to form a second valve core channel.

According to one embodiment of the present disclosure, the fluid control valve further comprises a valve seat, the valve seat abuts against the valve core and is mounted in the second valve port, the third valve port, the fourth valve port and the fifth valve port of the valve body, and the valve seat provides sealed communication between corresponding valve ports of the valve body and corresponding valve core ports of the valve core. It should be noted that, in this embodiment, the first valve port of the valve body is not mounted with a valve seat.

According to one embodiment of the present disclosure, the valve core is able to rotate about the rotation axis to a first position and a second position relative to the valve body. When the valve core is in the first position, the first valve port is in communication with the second valve port via the first valve core channel, and the third valve port is in communication with the fifth valve port via the second valve core channel. When the valve core is in the second position, the first valve port is in communication with the fifth valve port via the first valve core channel, and the third valve port is in communication with the fourth valve port via the second valve core channel.

According to the above features, the fluid control valve defines two flow paths. When the valve core is in the first position, in one flow path, fluid enters and exits the fluid control valve through the first valve port and the second valve port, and in the other flow path, fluid enters and exits the fluid control valve through the third valve port and the fifth valve port. When the valve core is in the second position, in one flow path, fluid enters and exits the fluid control valve through the first valve port and the fifth valve port, and in the other flow path, fluid enters and exits the fluid control valve through the third valve port and the fourth valve port.

According to one embodiment of the present disclosure, the valve core is also able to rotate about the rotation axis to a third position relative to the valve body. When the valve core is in the third position, the first valve port is in communication with the fifth valve port via the second valve core channel, and the third valve port is in communication with the fourth valve port via the first valve core channel.

According to the above features, when the valve core is in the third position, in one flow path, fluid enters and exits the fluid control valve through the first valve port and the fifth valve port, and in the other flow path, fluid enters and exits the fluid control valve through the second valve port and the fourth valve port.

According to one embodiment of the present disclosure, the valve core has a first valve core port, a second valve core port, a third valve core port, a fourth valve core port, and an internal channel, the first valve core port and the second valve core port are provided with an opening at the valve core mounting cavity, and the third valve core port and the fourth valve core port are in sealed communication through the internal channel.

According to one embodiment of the present disclosure, the fluid control valve further comprises a valve seat, the valve seat abuts against the valve core and is mounted in a first valve port, a second valve port, a third valve port, a fourth valve port and a fifth valve port of the valve body, and the valve seat provides sealed communication between corresponding valve ports of the valve body and corresponding valve core ports of the valve core. It should be noted that, in this embodiment, the five valve ports of the valve body are each mounted with a valve seat.

According to one embodiment of the present disclosure, the valve core is able to rotate about the rotation axis to a first position and a second position relative to the valve body. When the valve core is in the first position, the first valve port is in communication with the second valve port via the valve core mounting cavity, and the third valve port is in communication with the fifth valve port via the internal channel. When the valve core is in the second position, the first valve port is in communication with the fifth valve port via the valve core mounting cavity, and the third valve port is in communication with the fourth valve port via the internal channel.

According to the above features, the fluid control valve defines two flow paths. When the valve core is in the first position, in one flow path, fluid enters and exits the fluid control valve through the first valve port and the second valve port, and in the other flow path, fluid enters and exits the fluid control valve through the third valve port and the fifth valve port. When the valve core is in the second position, in one flow path, fluid enters and exits the fluid control valve through the first valve port and the fifth valve port, and in the other flow path, fluid enters and exits the fluid control valve through the third valve port and the fourth valve port.

According to one embodiment of the present disclosure, the valve core further has a through hole, and the through hole forms a part of the second path of the balancing channel. That is to say, fluid can flow through the through hole from one side of the valve core, via the valve core, to the other side of the valve core, so that the two sides of the valve core are filled with fluid and are in a state of fluid equilibrium.

According to one embodiment of the present disclosure, the through hole is located between the first valve core port and the second valve core port in a circumferential direction of the valve core.

According to one embodiment of the present disclosure, the fluid control valve further comprises an elastic member, and one end of the elastic member abuts against the valve core along the rotation axis, so that a bottom surface of the valve core is biased against the valve seat.

According to one embodiment of the present disclosure, the valve core has an elastic member mounting groove provided at a top portion, the valve core and the elastic member mounting groove are coaxially arranged around the rotation axis, and one end of the elastic member is arranged in the elastic member mounting groove to abut against the valve core.

According to one embodiment of the present disclosure, the fluid control valve further comprises a bearing, and the other end of the elastic member abuts against a top portion of the valve body through the bearing.

According to one embodiment of the present disclosure, a valve port for mounting the valve seat among the first valve port to the fifth valve port comprises a stepped portion for supporting the valve seat.

According to one embodiment of the present disclosure, the valve body comprises a main valve body and a valve cap, wherein the valve cap is detachably mounted on a bottom portion of the main valve body to define the valve core mounting cavity, and the first valve port to the fifth valve port are all disposed on a bottom surface of the valve cap.

According to one embodiment of the present disclosure, the fluid control valve further comprises an actuating device, and the actuating device is disposed at a top portion of the valve body and used to actuate the valve core to rotate about the rotation axis relative to the valve body. The main valve body has a clearance hole provided at a top portion thereof, the valve core has a valve core shaft extending along the rotation axis, and an upper end of the valve core shaft extends to the outside of the valve body through the clearance hole and is coupled to the actuating device.

According to one embodiment of the present disclosure, the valve core shaft is directly connected to the actuating device, or the valve core shaft is connected to the actuating device through a transmission device.

According to one embodiment of the present disclosure, the valve cap is provided with a positioning countersunk hole, and a lower end of the valve core shaft is rotatably inserted into the positioning countersunk hole.

According to one embodiment of the present disclosure, the main valve body further has a limiting groove provided at a top portion thereof, and the valve core has a limiting pin provided at a top portion thereof, and the limiting groove and the limiting pin cooperate to restrict a rotation angle of the valve core.

According to one embodiment of the present disclosure, the valve cap is further provided with a positioning protrusion protruding from a bottom surface thereof for positioning an angular position of the fluid control valve.

### Brief Description of the Drawings

The foregoing and other features and advantages of the present disclosure will become more apparent from the following detailed description of exemplary embodiments with reference to the drawings, and the description and the drawings are for illustrative purposes only and are not intended to limit the scope of the present disclosure in any way. The drawings below are not drawn to scale according to actual dimensions but rather focus on showing the main purpose of the present disclosure. In the figures:
Fig. 1 is a perspective view of a fluid control valve according to one embodiment of the present disclosure.
Fig. 2A is a cross-sectional view of the fluid control valve shown in Fig. 1; Fig. 2B shows a partial cross-sectional view of the fluid control valve, in which a first path of a balancing channel is labeled.
Fig. 3 shows a valve cap according to one embodiment of the present disclosure.
Fig. 4 shows a valve seat according to one embodiment of the present disclosure.
Figs. 5A and 5B show a valve core according to one embodiment of the present disclosure.
Figs. 6A to 6C show a valve core according to another embodiment of the present disclosure, wherein Fig. 6C is a cross-sectional view taken along line a-a in Fig. 6B. Fig. 7 shows a partial cross-sectional view of a fluid control valve according to one embodiment of the present disclosure, wherein a first path and a second path of a balancing channel are labeled.
Fig. 8 shows a valve cap according to another embodiment of the present disclosure.
Fig. 9 shows a main valve body according to one embodiment of the present disclosure.

In all of the drawings, identical or similar components are indicated by identical reference numerals.

### Detailed Description of the Embodiments

To clarify the objective, technical solutions and advantages of embodiments of the present disclosure, the technical solutions of the embodiments of the present disclosure are described clearly and completely below in conjunction with the drawings of the embodiments of the present disclosure. Obviously, the described embodiments are some rather than all of the embodiments of the present disclosure.

Unless defined otherwise, the technical or scientific terms used herein shall have the common meanings as understood by those of ordinary skill in the field to which the present disclosure belongs. Words such as "one", "a" or "the" used in the description and the claims of the patent application disclosed herein do not indicate a quantity limit, but mean that there is at least one. Words such as "comprise" or "include" mean that the element or object appearing before the word encompasses the elements or objects and their equivalents listed after the word, without excluding other elements or objects. Words such as "first" and "second" used in the description and claims of the patent application disclosed herein do not denote any order, quantity or importance, and are merely used to distinguish different component parts. Words such as "connecting" or "connected" are not restricted to a physical or mechanical connection, and may include an electrical connection, whether direct or indirect. The terms "upper", "lower", "left", "right" and the like are only used to indicate a relative positional relationship, and when the absolute position of a described object changes, the relative positional relationship may also change accordingly.

Embodiments according to the present disclosure are described in detail with reference to the drawings. Here, it should be noted that, in the drawings, identical reference numerals are assigned to components that have substantially identical or similar structures and functions, and repeated descriptions about them will be omitted.

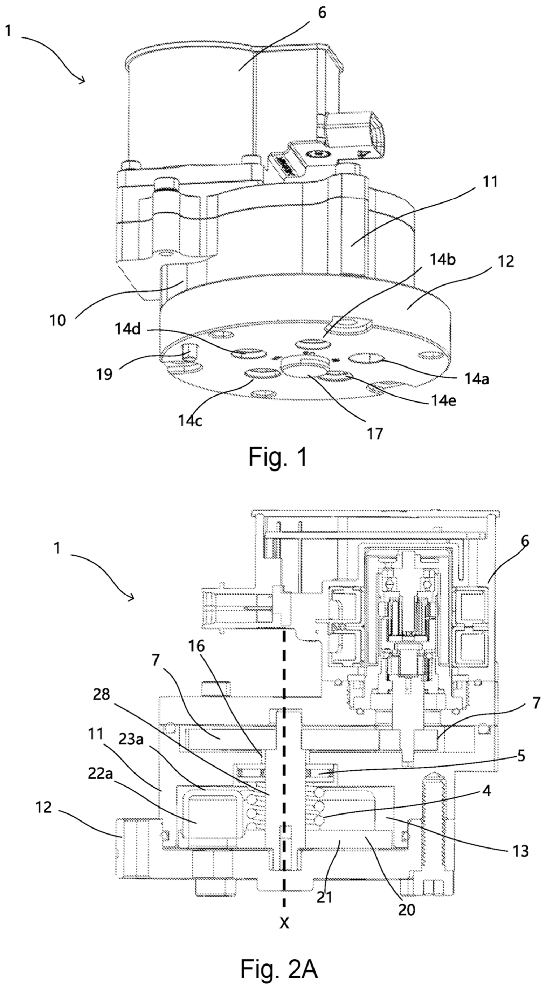

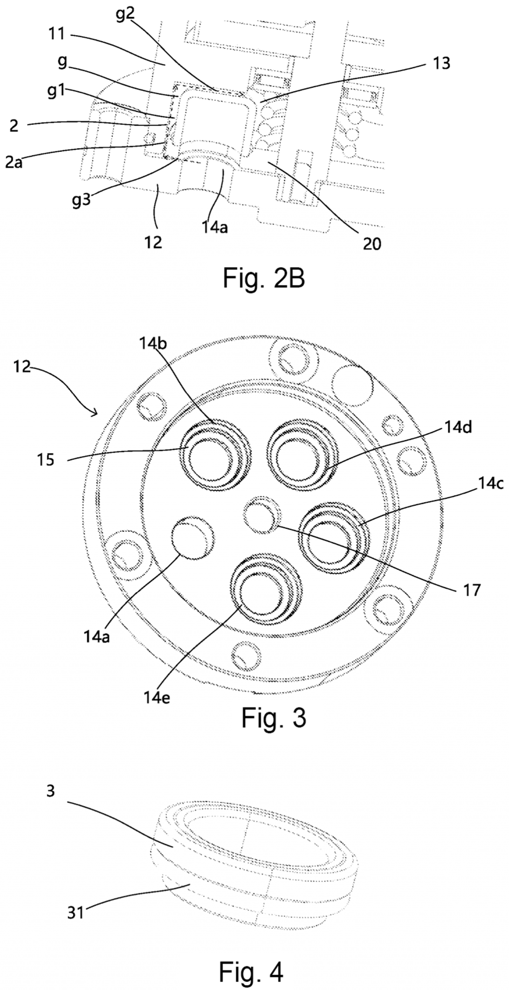

With reference to Figs. 1 and 2, a fluid control valve 1 comprises a valve body 10, a valve core 20, and an actuating device 6. The valve body 10 defines a valve core mounting cavity 13, and the valve core 20 is mounted in the valve core mounting cavity 13 and can rotate about a rotation axis X relative to the valve body 10. The rotation of the valve core 20 is actuated by the actuating device 6.

The valve body 10 comprises a main valve body 11 and a valve cap 12, and the valve cap 12 is detachably mounted at the bottom portion of the main valve body 11 to define a valve core mounting cavity 13. The actuating device 6 is mounted at the top portion of the main valve body 11. A first valve port 14a, a second valve port 14b, a third valve port 14c, a fourth valve port 14d, and a fifth valve port 14e are provided on the bottom surface of the valve cap 12 of the valve body 10. The fluid control valve 1 is in communication with other components of the fluid circuit through the first to fifth valve ports 14a to 14e. That is, the fluid control valve 1 is implemented as a five-way valve. It should be understood that the number of valve ports of the fluid control valve 1 may be different.

As shown in Fig. 1, the valve ports of the fluid control valve 1 are all located on the bottom surface of the valve cap 12. This allows the valve ports to be in communication with a fluid circuit when the fluid control valve 1 is mounted to the fluid circuit through this bottom surface, eliminating the tedious step of communicating each valve port of the fluid control valve 1 with the fluid circuit and simplifying the difficulty of assembly of the fluid circuit. The valve cap 12 further comprises a positioning protrusion 19 protruding from its bottom surface. When mounted on the fluid control valve 1, the positioning protrusion 19 may be used to position the angular position of the fluid control valve 1.

Specifically, the fluid control valve 1 is a fluid control valve for a fluid circuit of a thermal management system of a motor vehicle. The fluid flowing in the fluid circuit may comprise a refrigerant and/or a heat exchange fluid. The refrigerant may be in a high-pressure state and a low-pressure state, and thus the fluid circuit comprises a high-pressure fluid circuit and a low-pressure fluid circuit. The valve ports of the fluid control valve 1 may each be connected to the high-pressure fluid circuit and the low-pressure fluid circuit. Hereinafter, for ease of description, a valve port for the high-pressure fluid circuit to enter the fluid control valve 1 is designated as the first valve port 14a. It should be understood that the above designation is merely exemplary and not restrictive, and the fluid control valve 1 may be in communication with the high-pressure fluid circuit and the low-pressure fluid circuit through different valve ports.

As can be seen with reference to Figs. 1 and 2, the first to fifth valve ports 14a to 14e are all located on the lower side of the valve core 20. This causes the valve core 20 to be subjected to an upward fluid pressure bias. To balance this bias caused by the fluid pressure, the fluid control valve 1 has a balancing channel 2 provided within the valve core mounting cavity 13. The balancing channel 2 has such an effect that the portion of the valve core mounting cavity 13 on the upper side of the valve core 20 is in fluid communication with the portion on the lower side of the valve core 20. Thus, through the balancing channel 2, the fluid on the upper and lower sides of the valve core 20 can be in a balanced state, and the fluid pressures on the upper and lower sides of the valve core 20 can cancel each other out.

With reference to Fig. 2B, there is a gap g between the edge of the valve core 20 and the valve body 10. Through the gap g, fluid can bypass the edge of the valve core 20 from one side of the valve core 20 to reach the other side of the valve core 20, and the gap g forms a first path 2a of the balancing channel 2. Furthermore, the gap g eliminates friction between the edge of the valve core 20 and the valve body 10, which is helpful to reduce the resistance encountered by the valve core 20 during rotation.

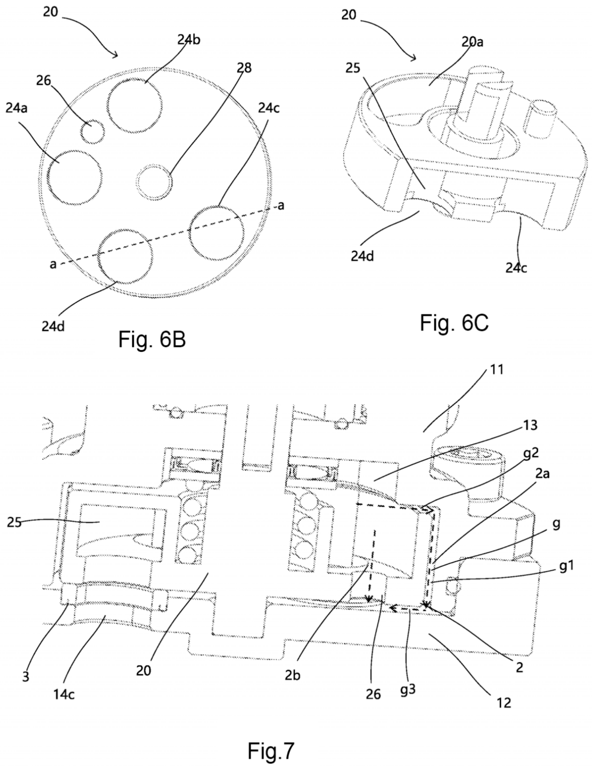

In the embodiments shown in Figs. 2B and 7, the gap g comprises a first portion g1 extending parallel to the rotation axis X, a second portion g2 extending perpendicular to the rotation axis X, and a third portion g3 extending perpendicular to the rotation axis X. The second portion g2 and the third portion g3 of the gap g are located on the upper and lower sides of the valve core 20, respectively. The second portion g2 of the gap g exists between the valve core 20 and the main valve body 11, and the third portion g3 of the gap g exists between the valve core 20 and the valve cap 12. The first portion g1 of the gap g also exists between the valve core 20 and the main valve body 11. In embodiments not shown in the figures, the first portion g1 of the gap g may also be provided between the valve core 20 and the valve cap 12. The balancing channel 2 is in communication with two sides of the valve core 20 along the extension direction of the rotation axis X, i.e., two sides of the valve core 20 in the axial direction.

In the embodiment shown in Fig. 2B, along the first path 2a of the balancing channel 2, fluid flows from the third portion g3 of the gap g to the first portion g1, and then to the second portion g2, so as to bypass the edge of the valve core 20 from one side of the valve core 20 to reach the other side of the valve core 20.

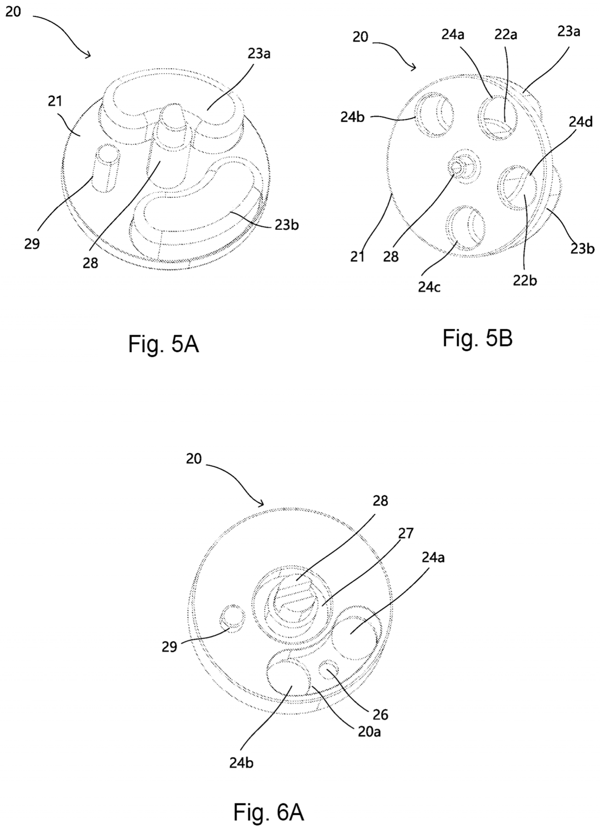

The valve core 20 of the fluid control valve 1 may have different configurations. Figs. 5A and 5B show a first embodiment of the valve core 20. As shown in the figures, in this first embodiment, the valve core 20 comprises a core body 21, a first sealing cap 23a, and a second sealing cap 23b. The core body 21 is provided with a first valve core port 24a, a second valve core port 24b, a third valve core port 24c, and a fourth valve core port 24d. The above first to fourth valve core ports 24a to 24d each run through the core body 21. The first sealing cap 23a is connected to the core body 21 and covers the first valve core port 24a and the second valve core port 24b. The connection between the first sealing cap 23a and the core body 21 is preferably a sealed connection, which may be achieved by means of welding or the like, for example. The first sealing cap 23a allows a sealed communication to be provided between the first valve core port 24a and the second valve core port 24b to form a first valve core channel 22a. Similarly, the second sealing cap 23b is connected to the core body 21 and covers the third valve core port 24c and the fourth valve core port 24d. The connection between the second sealing cap 23b and the core body 21 is preferably a sealed connection, which may be achieved by means of welding or the like, for example. The second sealing cap 23b allows a sealed communication to be provided between the third valve core port 24c and the fourth valve core port 24d to form a second valve core channel 22b.

The fluid control valve 1 further comprises a valve seat 3. The valve seat 3 is arranged between the valve cap 12 and the valve core 20, and has a hollow structure, which allows a sealed communication to be provided between corresponding valve ports of the valve cap 12 and corresponding valve core ports of the valve core 20. As shown in Figs. 3 and 4, the second valve port 14b, the third valve port 14c, the fourth valve port 14d, and the fifth valve port 14e of the valve cap 12 each comprise a stepped portion 15. One end of the valve seat 3 is partially inserted into the valve port and supported on the stepped portion 15 by a sealing member 31. The other end of the valve seat 3 abuts against the bottom surface of the core body 21 to be in communication with the corresponding valve port and the valve core channel. It is also possible to refer to the cross-sectional view shown in Fig. 7, which shows the valve seat 3 mounted in the third valve port 14c.

In the valve cap 12 shown in Fig. 3, the first valve port 14a does not have a stepped portion, and no valve seat 3 is mounted in the first valve port 14a. This can be seen in the cross-sectional view shown in Fig. 2B. Therefore, there is no seal between the first valve port 14a and the valve core 20. The first valve port 14a directly leads to the valve core mounting cavity 13 and is thus in communication with the balancing channel 2. More specifically, the first valve port 14a is in communication with the third portion g3 of the gap g. As mentioned above, the first valve port 14a is a valve port through which high-pressure fluid enters the fluid control valve 1. The balancing channel 2 may be provided to be in communication with the first valve port 14a. Thus, the high-pressure fluid entering from the first valve port 14a fills the valve core mounting cavity 13 on both the lower and upper sides of the valve core 20, which can effectively prevent the valve core 20 from being subjected to unbalanced fluid bias. Since the other valve ports and valve core ports are all sealedly connected through valve seats, the fluids in different flow paths of the fluid control valve 1 will not mix.

Figs. 6A to 6C and 7 show a second embodiment of the valve core 20. In this embodiment, the valve core 20 has a first valve core port 24a, a second valve core port 24b, a third valve core port 24c, a fourth valve core port 24d, and an internal channel 25. The first valve core port 24a and the second valve core port 24b are provided with an opening at the valve core mounting cavity 13, and the third valve core port 24c and the fourth valve core port 24d are in sealed communication through the internal channel 25.

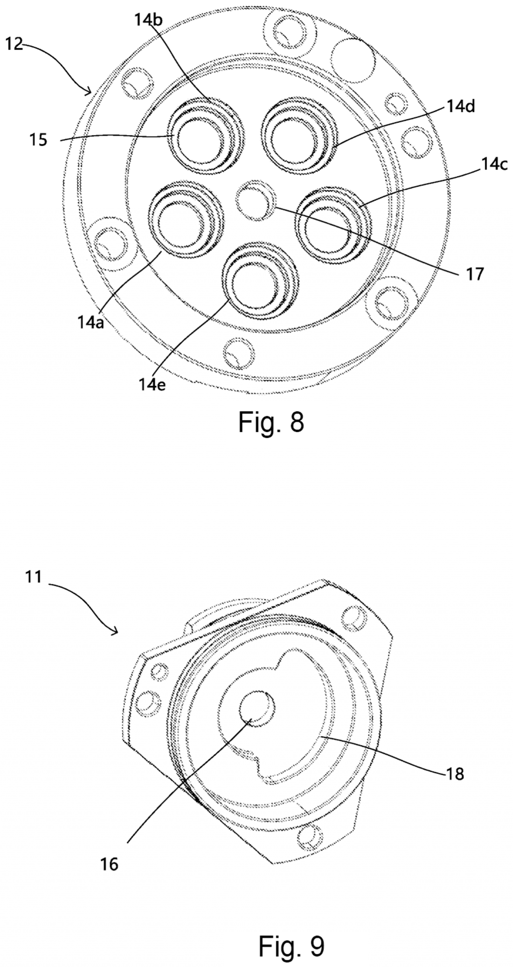

A valve cap 12 matching the valve core 20 of the second embodiment is shown in Fig. 8, and its configuration differs slightly from that of the valve cap 12 shown in Fig. 3. In this embodiment, the first to fifth valve ports 14a to 14e of the valve cap 12 each comprise a stepped portion 15 and are each mounted with a valve seat 3. Therefore, the connections between the valve ports and the valve core ports are sealed by the valve seats 3. Specifically, the first valve port 14a is selectively in communication with the first valve core port 24a or the second valve core port 24b provided with an opening at the valve core mounting cavity 13. Specifically, as shown in Figs. 6A, 6B, and 6C, the valve core 20 has a groove 20a located within the valve core mounting cavity 13 and in communication with the valve core mounting cavity 13. The opening of the groove 20a is formed on the upper end face of the valve core 20. One end of the first valve core port 24a and the second valve core port 24b are formed on the bottom wall of the groove 20a, and the other end is formed on the lower end face of the valve core 20. The groove 20a is in communication with the valve core mounting cavity 13 through the opening. The first valve port 14a indirectly leads to the valve core mounting cavity 13 through the first valve core port 24a or the second valve core port 24b. Therefore, the balancing channel 2 is also in communication with the first valve port 14a, so that the high-pressure fluid entering from the first valve port 14a fills the valve core mounting cavity 13 on both the lower and upper sides of the valve core 20.

As shown in Figs. 6A to 6B, the valve core 20 may further be provided with a through hole 26. The through hole 26 is located between the first valve core port 24a and the second valve core port 24b in a circumferential direction. One end of the through hole 26 is formed on the bottom wall of the groove 20a, and the other end is formed on the lower end face of the valve core 20. Fluid can pass from one side of the valve core 20 through the through hole 26 to the other side of the valve core 20, which forms the second path 2b of the balancing channel 2. It should be noted that fluid can still bypass the edge of the valve core 20 from one side of the valve core 20 to reach the other side of the valve core 20. That is to say, the balancing channel 2 also has a first path 2a. Fig. 7 shows a balancing channel 2 with a first path 2a and a second path 2b. In the embodiment shown in Fig. 7, along the first path 2a of the balancing channel 2, fluid flows from the second portion g2 of the gap g to the first portion g1, and then to the third portion g3. Furthermore, it should be noted that, although not shown in the drawings, the valve core 20 according to the first embodiment shown in Figs. 5A and 5B may also comprise a similar through hole.

With reference to Fig. 2A, the fluid control valve 1 further comprises an elastic member 4. The elastic member 4 is, for example, a helical spring, one end of which abuts against the valve core 20 along the rotation axis X, and the other end abuts against the top portion of the valve body 10 through a bearing 5. The elastic force of the elastic member 4 biases the bottom surface of the valve core 20 against the valve seat 3, thereby ensuring a seal between the valve seat 3 and the valve core 20 and the valve cap 12. The bearing 5 facilitates the rotation of the valve core 20 relative to the valve body 10. In the valve core 20 of the first embodiment shown in Fig. 5A, the inner edges of the first sealing cap 23a and the second sealing cap 23b have an arc shape. The elastic member 4 abuts against the valve core 20 on the inner sides of the first sealing cap 23a and the second sealing cap 23b. In the valve core 20 of the second embodiment shown in Fig. 6A, the valve core 20 has an elastic member mounting groove 27 provided at its top portion. The elastic member mounting groove 27 is coaxially arranged with the valve core 20 about the rotation axis X. The elastic member 4 abuts against the valve core 20 within the elastic member mounting groove 27.

With continued reference to Fig. 2A, the fluid control valve 1 further comprises an actuating device 6 arranged on the top portion of the valve body 10. The rotation of the valve core 20 relative to the valve body 10 about the rotation axis X is actuated by this actuating device 6. A clearance hole 16 is provided at the top portion of the main valve body 11. The valve core 20 has a valve core shaft 28 extending along the rotation axis X, and the upper end of the valve core shaft 28 extends through the clearance hole 16 to the outside of the valve body 10 and is coupled to the actuating device 6. In the example shown in Fig. 2A, the actuating device 6 is not coaxial with the valve body 10, and the valve core shaft 28 is indirectly connected to the actuating device 6 through a transmission device 7. It is conceivable that the actuating device 6 may also be provided to be coaxial with the valve body 10, and the valve core shaft 28 is directly connected to the actuating device 6. As shown in Figs. 1 to 3, the valve cap 12 has a positioning countersunk hole 17 provided on its inner side, and the lower end of the valve core shaft 28 is rotatably inserted into the positioning countersunk hole 17. The positioning countersunk hole 17 is coaxial with the clearance hole 16.

The rotation of the valve core 20 relative to the valve body 10 allows the valve port to be aligned with different valve core ports, thereby making it possible to control the flow path of the fluid.

For the first embodiment shown in Fig. 5A, the valve core 20 can rotate about the rotation axis X to a first position, a second position and a third position relative to the valve body 10, wherein the first position is between the second position and the third position in a circumferential direction.

When the valve core 20 is in the first position, the fluid has two circulation paths within the fluid control valve 1: first valve port 14a → valve core mounting cavity 13 → first valve core port 24a → first valve core channel 22a → second valve core port 24b → second valve port 14b; and third valve port 14c → third valve core port 24c → second valve core channel 22b → fourth valve core port 24d → fifth valve port 14e. That is to say, the first valve port 14a is in communication with the second valve port 14b via the first valve core channel 22a, the third valve port 14c is in communication with the fifth valve port 14e via the second valve core channel 22b, and the fourth valve port 14d is in an idle state.

When the valve core 20 is in the second position, the fluid has two circulation paths within the fluid control valve 1: first valve port 14a → valve core mounting cavity 13 → second valve core port 24b → first valve core channel 22a → first valve core port 24a → fifth valve port 14e; and third valve port 14c → fourth valve core port 24d → second valve core channel 22b → third valve core port 24c → fourth valve port 14d. That is to say, the first valve port 14a is in communication with the fifth valve port 14e via the first valve core channel 22a, the third valve port 14c is in communication with the fourth valve port 14d via the second valve core channel 22b, and the second valve port 14b is in an idle state.

When the valve core 20 is in the third position, the fluid has two circulation paths within the fluid control valve 1: first valve port 14a → valve core mounting cavity 13 → fourth valve core port 24d → second valve core channel 22b --+ third valve core port 24c → fifth valve port 14e; and second valve port 14b → first valve core port 24a → first valve core channel 22a → second valve core port 24b → fourth valve port 14d. That is to say, the first valve port 14a is in communication with the fifth valve port 14e via the second valve core channel 22b, the second valve port 14b is in communication with the fourth valve port 14d via the first valve core channel 22a, and the third valve port 14c is in an idle state.

It should be noted that, for the first embodiment shown in Fig. 5A, since no valve seat is mounted on the first valve port 14a, the communication between the first valve port 14a and the valve core channel needs to pass through the valve core mounting cavity 13. More specifically, the first valve port 14a is in communication with the third portion g3 of the gap g.

In the second embodiment shown in Fig. 6A, the valve core 20 can rotate about the rotation axis X to a first position and a second position relative to the valve body 10.

When the valve core 20 is in the first position, the fluid has two circulation paths within the fluid control valve 1: first valve port 14a → first valve core port 24a → valve core mounting cavity 13 → second valve core port 24b → second valve port 14b; and third valve port 14c → third valve core port 24c → internal channel 25 → fourth valve core port 24d → fifth valve port 14e. That is to say, the first valve port 14a is in communication with the second valve port 14b via the valve core mounting cavity 13, the third valve port 14c is in communication with the fifth valve port 14e via the internal channel 25, and the fourth valve port 14d is in an idle state.

When the valve core 20 is in the second position, the fluid has two circulation paths within the fluid control valve 1: first valve port 14a → second valve core port 24b → valve core mounting cavity 13 → first valve core port 24a → fifth valve port 14e; and third valve port 14c → fourth valve core port 24d → internal channel 25 → third valve core port 24c → fourth valve port 14d. That is to say, the first valve port 14a is in communication with the fifth valve port 14e via the valve core mounting cavity 13, the third valve port 14c is in communication with the fourth valve port 14d via the internal channel 25, and the second valve port 14b is in an idle state.

In this second embodiment, the first valve port 14a is in communication with one of the first valve core port 24a and the second valve core port 24b provided with an opening at the valve core mounting cavity 13. As shown in Fig. 7, after passing through the first valve core port 24a or the second valve core port 24b, the fluid can flow from one side of the valve core 20 in the axial direction to the other side of the valve core 20 via the first path 2a or the second path 2b of the balancing channel 2. In the embodiment shown in Fig. 7, along the first path 2a of the balancing channel 2, the fluid flows from the second portion g2 of the gap g to the first portion g1, and then to the third portion g3.

When the valve core 20 is in the first position and the second position, the first valve port 14a may separately be in communication with one of the first valve core port 24a and the second valve core port 24b.

As shown in Fig. 8, the fluid control valve 1 further has a limiting groove 18 provided on the top portion of the main valve body 11. Correspondingly, a limiting pin 29 is provided on the top portion of the valve core 20. The cooperation between the limiting pin 29 and the limiting groove 18 can restrict the rotation angle of the valve core 20, so that it will not exceed the first position, second position or third position as described above.

Advantageously, the first to fifth valve ports 14a to 14e are symmetrically distributed on the valve cap 12 about the rotation axis X, i.e., spaced 72° apart from each other. The first to fourth valve core ports 24a to 24d are also distributed on the valve core 20 at 72° intervals. As shown in Figs. 5B or 6B, the space between the second valve core port 24a and the third valve core port 24c is left empty, or a blind hole may be provided. Thus, the angle of rotation of the valve core 20 between the first position and the second position is 72°, and the angle of rotation between the first position and the third position is also 72°.

Certain features, structures or characteristics in one or more embodiments of the present disclosure may be combined appropriately.

The above is a description of the present disclosure and should not be regarded as a limitation thereof. Although several exemplary embodiments of the present disclosure have been described, it will be readily understood by those skilled in the art that many modifications may be made to the exemplary embodiments without departing from the novel teaching and advantages of the present disclosure. Therefore, all such modifications are intended to be included in the scope of the present disclosure as defined by the claims. It should be understood that the above is a description of the present disclosure, and the present disclosure should not be considered to be limited to the specific embodiments disclosed; moreover, modifications to the disclosed embodiments and other embodiments are intended to be included within the scope of the present disclosure.

## Claims

1. A fluid control valve (1), comprising:
a valve body (10), the valve body (10) having a valve core mounting cavity (13); and
a valve core (20), wherein the valve core (20) is mounted in the valve core mounting cavity (13), and is able to rotate about a rotation axis (X) relative to the valve body (10);
**characterized in that** the fluid control valve (1) has a balancing channel (2), the balancing channel (2) is located in the valve core mounting cavity (13), and the balancing channel (2) is in communication with two sides of the valve core (20).

2. The fluid control valve (1) as claimed in claim 1, **characterized in that**
the balancing channel (2) comprises a first path (2a) within the valve core mounting cavity (13) that bypasses an edge of the valve core (20) from one side of the valve core (20) to reach the other side of the valve core (20).

3. The fluid control valve (1) as claimed in claim 1, **characterized in that**
the balancing channel (2) comprises a second path (2b) that runs through the valve core (20).

4. The fluid control valve (1) as claimed in any one of claims 1 to 3, **characterized in that**
the valve body (10) has a first valve port (14a), a second valve port (14b), a third valve port (14c), a fourth valve port (14d) and a fifth valve port (14e), wherein the first valve port (14a) is in communication with the balancing channel (2).

5. The fluid control valve (1) as claimed in claim 4, **characterized in that**
the valve core (20) comprises a core body (21), a first sealing cap (23a) and a second sealing cap (23b), and the core body (21) has a first valve core port (24a), a second valve core port (24b), a third valve core port (24c) and a fourth valve core port (24d),
wherein the first sealing cap (23a) is connected to the core body (21) and covers the first valve core port (24a) and the second valve core port (24b), so that the first valve core port (24a) and the second valve core port (24b) are in sealed communication to form a first valve core channel (22a), and
wherein the second sealing cap (23b) is connected to the core body (21) and covers the third valve core port (24c) and the fourth valve core port (24d), so that the third valve core port (24c) and the fourth valve core port (24d) are in sealed communication to form a second valve core channel (22b).

6. The fluid control valve (1) as claimed in claim 5, **characterized in that**
the fluid control valve (1) further comprises a valve seat (3), the valve seat (3) abuts against the valve core (20) and is mounted in the second valve port (14b), the third valve port (14c), the fourth valve port (14d) and the fifth valve port (14e) of the valve body (10), and the valve seat (3) provides sealed communication between corresponding valve ports of the valve body (10) and corresponding valve core ports of the valve core (20).

7. The fluid control valve (1) as claimed in claim 5 or 6, **characterized in that**
the valve core (20) is able to rotate about the rotation axis (X) to a first position and a second position relative to the valve body (10),
wherein when the valve core (20) is in the first position, the first valve port (14a) is in communication with the second valve port (14b) via the first valve core channel (22a), and the third valve port (14c) is in communication with the fifth valve port (14e) via the second valve core channel (22b); and
when the valve core (20) is in the second position, the first valve port (14a) is in communication with the fifth valve port (14e) via the first valve core channel (22a), and the third valve port (14c) is in communication with the fourth valve port (14d) via the second valve core channel (22b).

8. The fluid control valve (1) as claimed in claim 7, **characterized in that**
the valve core (20) is also able to rotate about the rotation axis (X) to a third position relative to the valve body (10),
wherein when the valve core (20) is in the third position, the first valve port (14a) is in communication with the fifth valve port (14e) via the second valve core channel (22b), and the second valve port (14b) is in communication with the fourth valve port (14d) via the first valve core channel (22a).

9. The fluid control valve (1) as claimed in claim 4, **characterized in that**
the valve core (20) has a first valve core port (24a), a second valve core port (24b), a third valve core port (24c), a fourth valve core port (24d), and an internal channel (25), the first valve core port (24a) and the second valve core port (24b) are provided with an opening at the valve core mounting cavity (13), and the third valve core port (24c) and the fourth valve core port (24d) are in sealed communication through the internal channel (25).

10. The fluid control valve (1) as claimed in claim 9, **characterized in that**
the fluid control valve (1) further comprises a valve seat (3), the valve seat (3) abuts against the valve core (20) and is mounted in a first valve port (14a), a second valve port (14b), a third valve port (14c), a fourth valve port (14d) and a fifth valve port (14e) of the valve body (10), and the valve seat (3) provides sealed communication between corresponding valve ports of the valve body (10) and corresponding valve core ports of the valve core (20).

11. The fluid control valve (1) as claimed in claim 9 or 10, **characterized in that**
the valve core (20) is able to rotate about the rotation axis (X) to a first position and a second position relative to the valve body (10),
wherein when the valve core (20) is in the first position, the first valve port (14a) is in communication with the second valve port (14b) via the valve core mounting cavity (13), and the third valve port (14c) is in communication with the fifth valve port (14e) via the internal channel (25); and
when the valve core (20) is in the second position, the first valve port (14a) is in communication with the fifth valve port (14e) via the valve core mounting cavity (13), and the third valve port (14c) is in communication with the fourth valve port (14d) via the internal channel (25).

12. The fluid control valve (1) as claimed in claim 5 or 9, **characterized in that**
the valve core (20) further has a through hole (26), and the through hole (26) forms a part of the second path (2b) of the balancing channel (2).

13. The fluid control valve (1) as claimed in claim 12, **characterized in that**
the through hole (26) is located between the first valve core port (24a) and the second valve core port (24b) in a circumferential direction of the valve core.

14. The fluid control valve (1) as claimed in claim 6 or 10, **characterized in that**
the fluid control valve (1) further comprises an elastic member (4), and one end of the elastic member (4) abuts against the valve core (20) along the rotation axis (X), so that a bottom surface of the valve core (20) is biased against the valve seat (3).

15. The fluid control valve (1) as claimed in claim 14, **characterized in that**
the valve core (20) has an elastic member mounting groove (27) provided at a top portion, the valve core (20) and the elastic member mounting groove (27) are coaxially arranged around the rotation axis (X), and one end of the elastic member (4) is arranged in the elastic member mounting groove (27) to abut against the valve core (20).
